(19) Europäisches Patentamt
European Patent Office
Office européen des brevets

(11) **EP 2 126 603 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(21) Anmeldenummer: **07847804.7**

(22) Anmeldetag: **04.12.2007**

(51) Int Cl.:
*G01S 7/35* (2006.01)    *G01S 13/34* (2006.01)
*G01S 13/36* (2006.01)    *G01S 13/38* (2006.01)
*G01S 13/536* (2006.01)    *G01S 13/93* (2006.01)

(86) Internationale Anmeldenummer:
**PCT/EP2007/063305**

(87) Internationale Veröffentlichungsnummer:
**WO 2008/080744 (10.07.2008 Gazette 2008/28)**

(54) **FMCW-Radarverfahren mit Auswertung der Phase der Differenzsignale**

FMCW radar method with analysis of the phase of differential signals

Procédé pour radar FMCW avec évaluation de la phase des signaux différentiels

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.12.2006 DE 102006061670**

(43) Veröffentlichungstag der Anmeldung:
**02.12.2009 Patentblatt 2009/49**

(73) Patentinhaber: **Robert Bosch GmbH**
**70442 Stuttgart (DE)**

(72) Erfinder: **STEFFENS, Wolf**
**71083 Herrenberg (DE)**

(56) Entgegenhaltungen:
**DE-A1- 19 651 540**     **DE-A1-102004 047 087**
**DE-A1-102005 012 945**

**Beschreibung**

STAND DER TECHNIK

Die vorliegende Erfindung betrifft ein Verfahren zum Betreiben eines Radars, insbesondere eines Radars für Fahrerassistenzsystem in einem Kraftfahrzeug. und ein Radar, welches das vorgenannte Verfahren durchführt.

Fahrerassistenzsysteme erleichtern das Führen eines Fahrzeuges in Alltagssituationen, wie z.B. beim Einparken, beim Fahren im Kolonnenverkehr, aber auch in Ausnahmesituationen, z.B. zur Vermeidung eines Unfalls. Die Fahrerassistenzsysteme benötigen hierzu zuverlässige Radarsysteme, die den Abstand zu einem Hindernis und gegebenenfalls dessen Relativgeschwindigkeit zu dem Fahrzeug bestimmen.

Zweckmäßigerweise werden FMCW-Radars (frequency modulated continuous wave radar; frequenzmoduliertes Dauerstrich-Radar) verwendet. Das FMCW-Radar emittiert ein Ausgangssignal mit sich monoton ändernder Frequenz gemäß mehreren einstellbaren Modulationsraten. Die von einem potentiellen Hindernis reflektierten Anteile des emittierten Signals werden von dem Radar empfangen. Das momentan empfangene und das momentan emittierte Signal unterscheiden sich in ihrer Frequenz in Abhängigkeit der Laufzeit von einem emittierten Signal zu dem potentiellen Hindernis und der momentanen Modulationsrate der Frequenz des emittierten Signals. Eine Auswertungseinrichtung bestimmt aus der Differenz der Frequenzen die Laufzeit und somit die Entfernung zu dem potentiellen Hindernis.

Eine Frequenzänderung ergibt sich auch entsprechend dem Dopplereffekt bei einer Relativbewegung des Hindernisses zu dem Radar. Eine Auswertung dieser Frequenzverschiebung ermöglicht die Bestimmung der Relativgeschwindigkeit.

Da eine Frequenzverschiebung sowohl auf den Abstand als auch die Relativgeschwindigkeit zurückgeführt werden kann, ist eine einzelne Messung für diese beiden Größen nicht eindeutig. Es wird eine zweite Messung durchgeführt. Die Modulationsrate bei der zweiten Messung ist verschieden zu der Modulationsrate bei der ersten Messung. Eine Identifizierung des Beitrags der Relativgeschwindigkeit zu der Frequenzverschiebung ist aufgrund der Unabhängigkeit von der Änderung der Modulationsrate der Frequenz des emittierten Signals, im Gegensatz zu den Signallaufzeitmessungen für den Abstand identifizierbar.

Das vorgenannte Verfahren erfordert, dass die erste Messung eindeutig der zweiten Messung zuordenbar ist. Solange nur ein Hindernis vorhanden ist, ist dies in trivialer Weise möglich. Jedoch ergeben sich erhebliche Schwierigkeiten, wenn Signale von mehreren Objekten in unterschiedlichen Entfernungen und/oder mit unterschiedlichen Relativgeschwindigkeiten empfangen werden. Eine Zuordnung von aufeinanderfolgenden Messungen zu einem Objekt erfordert aufwändige Suchalgorithmen, welche unter Anderem die Trajektorie eines Objekts verfolgen.

Die DE 10 2004 047 087 A1 beschreibt ein Verfahren zur Objektverifikation in Radarsystemen für Kraftfahrzeuge, mit denen Abstände und Relativgeschwindigkeiten von georteten Objekten anhand von empfangenen Radarechos bestimmt werden. Dabei wird in den empfangenen Radarechos nach der Signatur von Mehrfachreflexionen gesucht.

Aus der DE 10 2005 012 945 A1 ist eine Verfahren und eine Vorrichtung zur Abstands- und Relativgeschwindigkeitsmessung von mehreren Objekten mittels eines FMCW-Radars bekannt, indem Sendesignale mit zeitlich linearen Rampensteigungen abgestrahlt werden und die an Objekten reflektierten Empfangssignale empfangen werden und mit den Sendesignalen gemischt werden. Den Mischerausgangsfrequenzen einer jeden Frequenzrampe für jedes Objekt wird eine Kombination von Abstands- und Relativgeschwindigkeitswerten zugeordnet und aus Schnittpunkten mehrerer Abstands- und Relativgeschwindigkeitskombinationen der Abstand und die Relativgeschwindigkeit eines möglichen Objekts bestimmt. Dabei können die möglichen Objekte infolge von Mehrdeutigkeiten Scheinobjekte oder reale Objekte sein. Die Scheinobjekte werden eliminiert, indem in einem darauf folgenden Messzyklus die Frequenzsteigung mindestens einer Frequenzrampe nach dem Zufallsprinzip geändert wird.

Ein aus der DE 196 51 540 bekanntes FMCW-Radarsystem zur Erfassung der Entfernung, der relativen Geschwindigkeit und des Azimuts eines Ziels sieht vor, Schwebungssignale von zwei Empfängerkanälen, welche durch Mischen der Empfangssignale mit einem Sendesignal erzeugt werden, einer Fouriertransformation zu unterwerfen, um die Frequenz und die Phase von Spitzenfrequenzkomponenten sowohl bei einem Anstiegsabschnitt, bei welchem die Frequenz der Übertragung ansteigt, als auch bei einem Abstiegsabschnitt, bei welchem die Frequenz der Übertragung sicher verringert, zu erfassen. Auf der Grundlage der von demselben Ziel abgeleiteten Spitzenfrequenzkomponenten werden die Phasendifferenzen zwischen den Empfängerkanälen in den Anstiegs- und Abstiegsabschnitten bestimmt. Die relative Beziehung zwischen dem Sendesignal und dem Empfangssignal wird auf Basis der Vorzeichen der Phasendifferenzen beurteilt. Jeweiligen Spitzenfrequenzen, welche als Absolutwerte der Frequenzdifferenzen zwischen dem Sendesignal und dem Empfangssignal erfasst werden, werden entsprechend dem Beurteilungsergebnis Vorzeichen zugewiesen. danach werden die Entfernung und die relative Geschwindigkeit des Ziels berechnet.

OFFENBARUNG DER ERFINDUNG

Das erfindungsgemäße Verfahren mit den Merkmalen des Patentanspruchs 1 schafft ein Verfahren zum Betreiben eines Radars, welches sich insbesondere eignet reflektierte Signale von einer Mehrzahl von Objekten einander zuzuweisen und die jeweiligen Abstände und/oder Relativgeschwindigkeiten zu den Objekten zu schätzen.
Hierzu sind folgende Verfahrensschritte vorgesehen:

- Bestimmen von ersten Differenzsignalen aus einem ersten ausgesendeten frequenzmodulierten Signal und empfangenen, von einer Mehrzahl von Objekten reflektierten Anteilen des ersten ausgesendeten frequenzmodulierten Signals;
- Bestimmen von jeweils einem ersten Chirpsignal zu jedem ersten Differenzsignal, wobei das erste Chirpsignal der zweifachen Ableitung der Phase des ersten Differenzsignals nach der Zeit entspricht;
- Bestimmen von zweiten Differenzsignalen aus einem zweiten ausgesendeten frequenzmodulierten Signal und empfangenen, von der Mehrzahl von Objekten reflektierten Anteilen des zweiten ausgesendeten frequenzmodulierten Signals;
- Bestimmen von jeweils einem zweiten Chirpsignal zu jedem zweiten Differenzsignal, wobei das zweite Chirpsignal der zweifachen Ableitung der Phase des zweiten Differenzsignals nach der Zeit entspricht;
- Zuordnen von einem der ersten Differenzsignale zu einem der zweiten Differenzsignale basierend auf einer Entsprechung des ersten Chirpsignals, das dem einen ersten Differenzsignal zugeordnet ist, zu dem zweiten Chirpsignal, das dem einen zweiten Differenzsignal zugeordnet ist; und
- Bestimmen von Abstand und/oder Relativgeschwindigkeit eines der Objekte basierend auf dem einen ersten Differenzsignal und dem einen dem ersten Differenzsignal zugeordneten zweiten Differenzsignal.

Die Phase eines Signals beschreibt den zeitlichen Verlauf der Amplitude. Die zeitliche Entwicklung der Phase wird herkömmlich in mehrere Anteile gemäß ihrer Zeitabhängigkeit unterteilt. Die Frequenz beschreibt die zeitliche Änderung der Phase, wobei diese Änderung selbst über die Zeit konstant ist. Der Frequenzchirp oder kurz Chirp beschreibt die Änderungen der Phase, wobei sich die Änderung selbst ebenfalls über die Zeit kontinuierlich ändert. Durch eine zweifache Ableitung, d.h. zweifaches Differenzieren, der Phase nach der Zeit erhält man eine dem Chirp proportionale Größe.
In der Einleitung ist diskutiert, dass eine Zuordnung der ersten Differenzsignale aus einer ersten Messung zu den zweiten Differenzsignalen aus einer zweiten Messung notwendig ist, um aus den beiden Differenzsignalen den Abstand und gegebenenfalls die Relativgeschwindigkeit zu bestimmen. Es wurde erkannt, dass eine solche Zuordnung durch einen Vergleich des Chirps eines ersten Differenzsignals aus der ersten Messung mit den Chirps jedes zweiten Differenzsignals aus den zweiten Messungen erfolgen kann. Der Chirp weist eine gegenüber der Frequenz andere nichttriviale Abhängigkeit von dem Abstand, der Relativgeschwindigkeit und der verwendeten Modulationsrate auf. Somit ist in dem Chirp eine zusätzliche weitere Information enthalten, die zur Auswertung heranziehbar ist.
Eine Ausgestaltung sieht vor, dass das Bestimmen des ersten und/oder des zweiten Chirpsignals folgende Schritte umfasst:

Ermitteln eines komplexen Spektrums des Differenzsignals;

- Anpassen eines jeweils eines theoretischen komplexen Spektrums an jedes Extremum des komplexen Spektrums;
- Bestimmen einer Phase des Spektrum gemäß

$$\Phi = \arctan\left(\frac{\mathrm{Im}(A)}{\mathrm{Re}(A)}\right),$$

- wobei Im(A) den Imaginärteil und Re(A) den Realteil des angepassten Spektrums bezeichnet; und
- Bestimmen des ersten und/oder des zweiten Chirpsignals als den Wert der zweifachen Ableitung der Phase nach der Frequenz bei der Frequenz an der das Spektrum das Extremum annimmt.

Das theoretische Spektrum kann durch eine Fourier-Transformierte des Differenzsignals bestimmt werden.
Eine Ausgestaltung sieht vor, dass das erste frequenzmodulierte Signal eine erste Modulationsrate und das zweite frequenzmodulierte Signal eine zweite Modulationsrate aufweist und die erste Modulationsrate und die zweite Modulationsrate verschieden sind.

Eine Ausgestaltung sieht vor, dass eine erstes Chirpsignal einem zweiten Chirpsignal entspricht, wenn der Quotient aus dem ersten Chirpsignal und der ersten Modulationsrate sich von dem Quotient aus dem zweiten Chirpsignal und der zweiten Modulationsrate um nicht mehr als einen vorgegebenen Schwellwert unterscheidet. Dieses Verfahren eignet sich insbesondere, wenn angenommen werden kann, dass die auftretenden Beschleunigungswerte gering sind.

Eine Ausgestaltung sieht vor, dass aus den Frequenzen der ersten und zweiten Differenzsignale ein erster Werteraum potentiell eingenommener Geschwindigkeiten eines Objekts bestimmt wird und aus den ersten und zweiten Chirpsignalen ein zweiter Werteraum potentiell eingenommener Geschwindigkeiten des Objekts bestimmt wird und das Objekt als mit der Geschwindigkeit bestimmt wird, die in beiden Werteräumen enthalten ist. Einführend ist beschrieben, dass aus den Frequenzen der ersten und zweiten Differenzsignale keine eindeutige Aussage über die Geschwindigkeit eines Objekts getroffen werden kann, wenn mehr als ein erstes Differenzsignal aufgrund mehrerer Objekte auftritt. Dennoch schränkt eine entsprechende Untersuchung die Zahl möglicher Geschwindigkeiten auf einen ersten Werteraum ein. In Analogie ergibt sich dieselbe Problematik der Nichteindeutigkeit bei der Auswertung von Chirpsignalen. Auch diese sind bei mehreren Objekten a priori nicht eindeutig aus den ersten und zweiten Messungen einander zuordbar. Aber eine Auswertung der Chirpsignale schränkt auch die Zahl möglicher Geschwindigkeiten auf einen zweiten Werteraum ein. Da die Abhängigkeit der Chirpsignale von der Geschwindigkeit und den Frequenzen der Differenzsignale verschieden ist, ist die Schnittmenge der beiden Werteräume klein, in den meisten Fällen umfasst die Schnittmenge nur die tatsächlich eingenommene Geschwindigkeit.

KURZE BESCHREIBUNG DER ZEICHNUNGEN

Nachfolgend wird die vorliegende Erfindung anhand einer bevorzugten Ausführungsform und beiliegender Figuren beschrieben. In den Figuren zeigen:

Fig. 1    schematische Darstellung einer beispielhaften Situation im Straßenverkehr;

Fig. 2    emittierte Signale mit unterschiedlichen Modulationsraten;

Fig. 3    Illustration zur Bestimmung von Abstand und Geschwindigkeit mittels eines Radars nach dem Stand der Technik;

Fig. 4    Spektrum;

Fig. 5    Blockdiagramm einer Ausführungsform;

Fig. 6, 7    Spektren bei zwei reflektierenden Objekten;

Fig. 8    Graphik zur einer Problematik bei der Bestimmung von Abstand und Geschwindigkeit bei zwei reflektierenden Objekten und

Fig. 9    Blockdiagramm einer Ausführungsform.

AUSFÜHRUNGSFORMEN DER ERFINDUNG

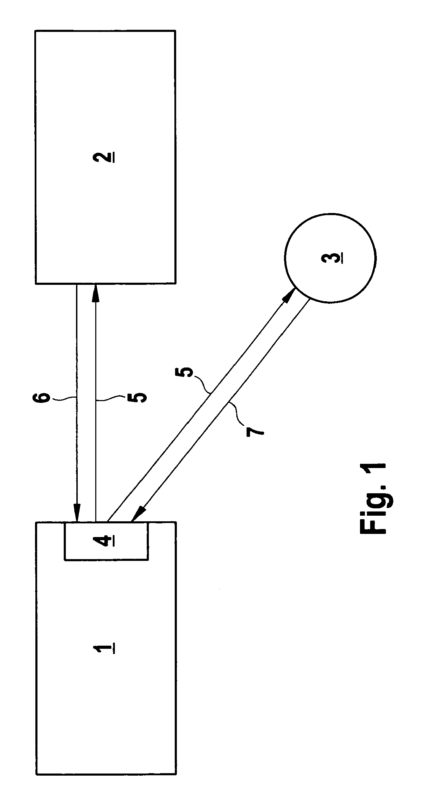

Figur 1 illustriert eine typische Situation im Straßenverkehr. Einem Fahrzeug 1 fährt ein Fahrzeug 2 voraus und seitlich am Straßenrand befindet sich ein Baum 3. Das vorausfahrende Fahrzeug 2 weist im Wesentlichen die gleiche Geschwindigkeit wie das Fahrzeug 1 auf, d.h. die Relativgeschwindigkeit ist nahezu 0. Der Abstand beträgt mehrere 10 m. Die Relativgeschwindigkeit des Fahrzeuges 1 zu dem stehenden Baum 3 entspricht der Geschwindigkeit, mit der der Fahrer des Fahrzeuges 1 fährt. Viele weitere Objekte mit unterschiedlichen Abständen und Relativgeschwindigkeiten bezüglich des Fahrzeuges 1 treten im Straßenverkehr auf, der hier beschriebene Baum 3 und das vorausfahrende Fahrzeug 2 sind rein exemplarisch zur Erläuterung der nachfolgend beschriebenen Ausführungsformen.

Das Fahrzeug 1 weist ein FMCW-Radar 4 auf. Das Radar emittiert ein Ausgangsignal 5 in Richtung zu dem vorausfahrenden Fahrzeug 2 und dem Baum 3. Das vorausfahrende Fahrzeug 2 reflektiert einen Anteil des emittierten Ausgangssignals 5 in Richtung zu dem Radar 4. Das reflektierte Signal 6 wird von dem Radar 4 empfangen. Gleichermaßen ergibt sich ein reflektiertes Signal 7 von dem Baum, welches zu dem Radar 4 gerichtet ist.

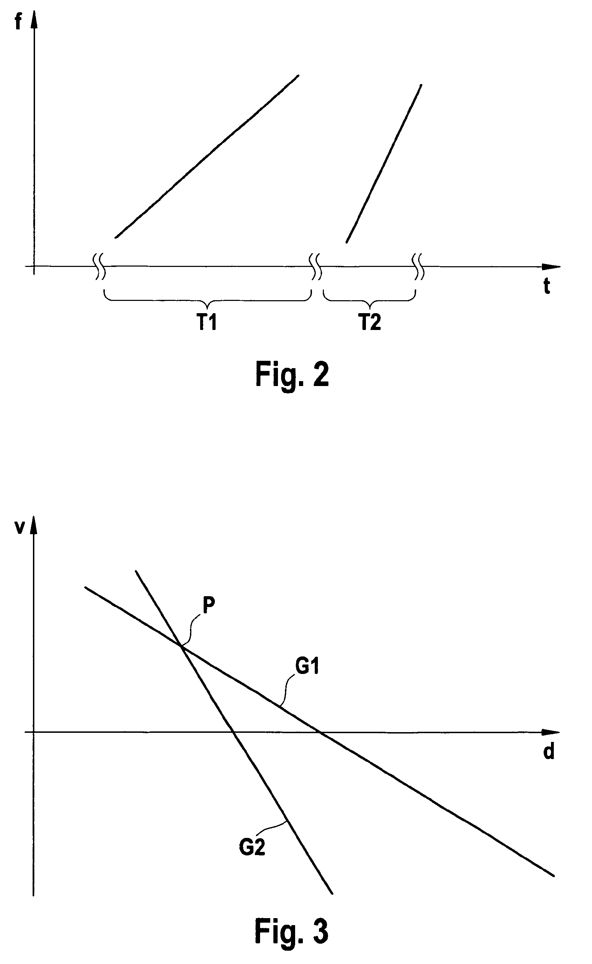

Das FMCW-Radar moduliert die Frequenz f des emittierten Signals 5. Innerhalb eines Zeitabschnittes T1, T2 wird die Frequenz f von einem Ausgangswert mit einer festen Modulationsrate geändert (vgl. Figur 2). Während der Laufzeit eines emittierten Signals 5 von dem Radar 4 zu dem vorausfahrenden Fahrzeug 2 und durch die Reflektion als reflektiertes Signal 6 zurück zu dem Radar 4, hat sich in der Zwischenzeit die Frequenz des nun emittierten Signals 5 verändert, in dem vorliegenden Beispiel erhöht. Bei einer bekannten Modulationsrate der Frequenz, typischerweise einer konstanten Modulationsrate, kann somit aus dem Frequenzunterschied zwischen dem momentan emittierten Signal 5 und dem momentan empfangenen reflektierten Signal 6 der Abstand zu dem vorausfahrenden Fahrzeug 2 bestimmt werden.

Bei den obigen Ausführungen zur Bestimmung des Abstandes ist angenommen, dass das vorausfahrende Fahrzeug 2 eine Relativgeschwindigkeit mit dem Betrag 0, d.h. keine Relativgeschwindigkeit, zum Fahrzeug 1 aufweist. Der Baum 3 bewegt sich auf das Fahrzeug 1 zu. Aufgrund der Relativbewegung erfährt das reflektierte Signal 7 gegenüber dem emittierten Signal 5 eine Frequenzverschiebung, die als Dopplereffekt oder Dopplerverschiebung bekannt ist. Die Frequenzänderung ist in guter Näherung proportional zur Relativgeschwindigkeit. Falls das Radar 4 die Frequenz des emittierten Signals 5 über die Zeit nicht variiert, kann aus der Frequenzverschiebung auf die Relativgeschwindigkeit geschlossen werden.

Im Regelfall weist das reflektierende Objekt, z.B. der Baum 3, eine Relativgeschwindigkeit auf und die Frequenz des emittierten Signals 5 wird über die Zeit variiert. Die Differenzfrequenz $f_d$ des momentan empfangenen reflektierten Signals zu dem momentan emittierten Signal ergibt sich nach folgender Beziehung:

$$f_d = \frac{2}{c}\left[sd + f_c v\right], \qquad (1)$$

wobei c die Lichtgeschwindigkeit, s die Modulationsrate der Frequenz des emittierten Signals 5, $f_c$ die Frequenz des emittierten Signals 5 zum Zeitpunkt der Emission und v die Relativgeschwindigkeit bezeichnet. In guter Näherung kann $f_c$ durch die mittlere Frequenz des emittierten Signals ersetzt werden.

Aus der Beziehung (1) ist ersichtlich, dass bei einer bekannten mittleren Frequenz $f_c$, einer bekannten Modulationsrate s und einer bestimmten Differenzfrequenz $f_d$ sich eine lineare Abhängigkeit zwischen möglichen Abständen d und möglichen Relativgeschwindigkeiten v eines reflektierenden Objekts ergibt. Diese Abhängigkeit lässt sich graphisch als eine Gerade G1 in einem Koordinatensystem mit der x-Achse gleich dem Abstand d und der y-Achse gleich der Geschwindigkeit v darstellen (Figur 3). Eine eindeutige Bestimmung des Abstandes d und eine eindeutige Bestimmung der Geschwindigkeit v wird durch eine zweite Messung erreicht, bei der die Modulationsrate s geändert ist. In der graphischen Darstellung führt dies zu einer zweiten Gerade G2 mit einer zur ersten Gerade G1 geänderten Steigung. Der Schnittpunkt der beiden Geraden gibt graphisch den tatsächlichen Abstand d und die tatsächliche Relativgeschwindigkeit v an.

Für die Erläuterung der nachfolgend beschriebenen Ausführungsform eines Verfahrens zum Betreiben eines Radars werden zunächst erkannte Eigenschaften der Differenzsignale beschrieben, welche für das Verfahren nützlich sind und verwendet werden.

Die Phase des Differenzsignals weist eine Zeitabhängigkeit auf, die sich näherungsweise durch die Beziehung 2 darstellen lässt:

$$\varphi = \varphi_0 + 2\,\pi\,f_d\,t + \pi\,\beta\,t^2, \qquad (2)$$

wobei $\varphi_0$ eine konstante Phase, $f_d$ die Differenzfrequenz des momentan reflektierten Signals zu dem momentan emittieren Signal, $\beta$ den sogenannten Frequenzchirp und t die Zeit bezeichnet. Abhängigkeiten der Phase $\varphi$ von Termen in dritter Ordnung der Zeit sind für die verwendeten FMCW-Radars im Straßenverkehr vernachlässigbar gering.

Der Frequenzchirp $\beta$ entspricht einer nicht-konstanten Änderung der Differenzfrequenz $f_d$ über die Zeit. Bei einem FMCW-Radar setzt sich der Frequenzchirp $\beta$ gemäß der Beziehung (3) zusammen:

$$\beta = \frac{2}{c}\left(f_c a + 2sv + d\,\frac{ds}{dt}\right) \qquad (3)$$

Der Ausdruck ds/dt bezeichnet Nicht-Linearitäten der Modulationsrate. Unterschreitet die Nicht-Linearität der Modulationsrate im Betrag $2{,}5 \cdot 10^{10}$ Hz/s$^2$ ist der Term bei typischerweise auftretenden Abstände d, Geschwindigkeiten v und Beschleunigungen a vernachlässigbar für den Chirp $\beta$.

Das Produkt aus der mittleren Emissionsfrequenz $f_c$ des FMCW-Radars und den im Straßenverkehr typisch auftretenden Beschleunigungen a, ist um mindestens eine Größenordnung geringer als das Produkt aus der Modulationsrate s und den typisch auftretenden Geschwindigkeiten v im Straßenverkehr. Die typischen mittleren Emissionsfrequenzen liegen im Bereich von $7{,}65 \cdot 10^{10}$ Hz und die typischen Modulationsraten s im Bereich von $5{,}0 \cdot 10^{16}$ Hz/s. Typische Geschwindigkeiten v eines Fahrzeugs liegen im Bereich zwischen 10 und 50 m/s, während die Beschleunigungswerte a nur in Ausnahmefällen Werte von $5 m/s^2$ erreichen. In guter Näherung ist der Frequenzchirp $\beta$ folglich nur von der Geschwindigkeit v und der Modulationsrate s abhängig.

Die Bestimmung des Chirps $\beta$ kann aus der zeitabhängigen Phase $\varphi$ durch zweifaches Differenzieren, d.h. Ableiten, nach der Zeit ermittelt werden, wie aus Beziehung (2) ersichtlich. In den nachfolgend beschriebenen Ausführungsformen erweist es sich allerdings als zweckmäßig den Chirp $\beta$ gemäß den nachfolgend beschriebenen Schritten zu bestimmen. Insbesondere erweist es sich als ausreichend eine dem Chirp $\beta$ proportionale Größe zu ermitteln. Zusammengefasst wird aufgezeigt, wie der Chirp $\beta$ oder eine ihm proportionale Größe durch zweifaches Ableiten nach der Frequenz aus einem Spektrum gewonnen wird.

Ein Spektrum entspricht der Fourier-Transformierten der Phase oder des Phasensignals. Falls das Phasensignal im Wesentlichen nur ein Extremum bei einer Frequenz $f_d$ aufweist kann das Spektrum durch folgende Beziehung angepasst werden:

$$A = \sqrt{\frac{\sigma}{4\rho}} \exp\left[ -\frac{1}{2}\left( \frac{f - f_d}{\rho} \right)^2 \right] \exp[-i\phi] + \text{c.c.} \qquad (4)$$

$$\phi = \varphi_0 + \psi - \pi \left( \frac{\sigma}{\rho} \right)^2 \beta (f - f_d)^2 \qquad (5)$$

$$\Psi = \arctan(2\pi\beta\sigma^2) \qquad (6)$$

$$\rho^2 = 1 / (2\pi\sigma)^2 + (\beta\sigma)^2 \qquad (7)$$

Die Parameter $\rho$, $\sigma$ und $\psi$ bezeichnen Parameter, die zum Anpassen eines theoretischen Spektrums nach der Beziehung (4) an ein reales Spektrum ermöglichen. Die Frequenzachse wird durch f, die Frequenz des Differenzsignals durch $f_d$ und der Chirp durch $\beta$ bezeichnet Das konjugiert Komplexe des Spektrums A wird durch das Kürzel c.c. bezeichnet. Die Beziehungen (5), (6) und (7) geben Definitionen für die in dem Spektrum nach Beziehung (4) verwendeten Größen an.

Weist das Phasensignal oder Differenzsignal mehr als ein Extremum auf, wird eine Linearkombination von Spektren A gemäß Beziehung (4) angepasst. Jedem Extremum bei der Frequenz $f_d$ oder jedem Differenzsignal, das von verschiedenen Objekten herrührt, wird somit ein eigenes Spektrum A zugeordnet.

Begrifflich wird für das Spektrum A eine Phase $\Phi$ eingeführt. Die Phase $\Phi$ gibt die Abhängigkeit des Spektrums von der Frequenzachse f an. Nachfolgend wird auf die Phase $\Phi$ als Phase $\Phi$ im Frequenzraum Bezug genommen. Die Phase $\Phi$ im Frequenzraum kann aus der Beziehung (4) bestimmt werden, nachdem das theoretische Spektrum A an das gemessene Spektrum angepasst ist. Für die Phase $\Phi$ im Frequenzraum gilt:

$$\Phi = \arctan\left( \frac{\text{Im}(A)}{\text{Re}(A)} \right) \qquad (8)$$

Die Phase $\Phi$ im Frequenzraum ist abhängig von dem Frequenzchirp $\beta$. Der Frequenzchirp $\beta$ führt zu einer Verbreiterung des Extremums des Spektrums A, welche durch den Parameter $\rho$ vorgegeben ist. Da diese Verbreiterung im Bereich weniger Prozent liegt, ist sie vernachlässigbar.

Eine zu dem Frequenzchirp β proportionale Größe wird durch zweifaches Ableiten der Phase Φ im Frequenzraum nach der Frequenz f ermittelt. Die Proportionalitätskonstante zwischen der zweifachen Ableitung der Phase Φ im Frequenzraum nach der Frequenz f und dem Frequenzchirp β ist im Wesentlichen nur von einer gewählten Fensterfunktion zum Ermitteln der Fourier-Transformierten, z.B. einer Gaußschen Fensterfunktion, und bei einer diskreten Fourier-Transformation von der Auflösung des Frequenzraums abhängig.

Das näherungsweise Bestimmen der zweifachen Ableitung der Phase Φ im Frequenzraum bei der Frequenz $f_d$ im Extremum kann wie folgt erfolgen:

$$\frac{d^2\Phi}{df^2} = \frac{\Phi_b - 2\Phi + \Phi_a}{(f_b - f_d)(f_d - f_a)}, \qquad\qquad (9)$$

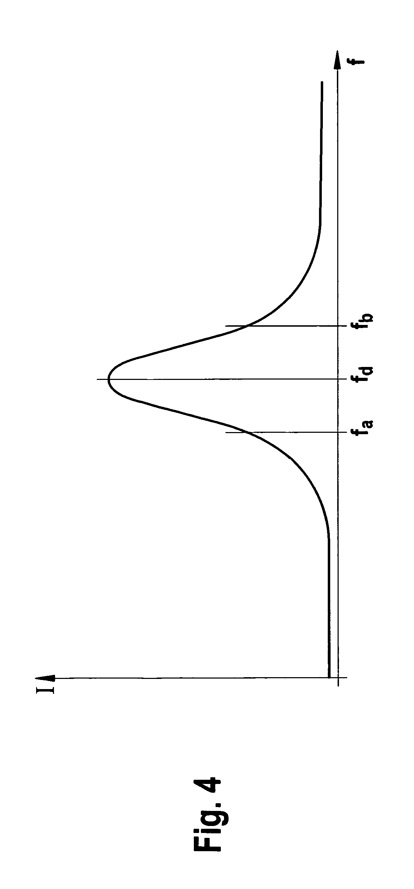

dabei bezeichnet $\Phi_a$ die Phase bei der Frequenz $f_a$, $\Phi_b$ die Phase bei der Frequenz $f_b$ und es gilt $f_a$ ist kleiner als die Frequenz $f_d$ und die Frequenz $f_d$ ist kleiner als die Frequenz $f_b$, vergleiche das Spektrum in Figur 4.

Das Verfahren zum Bestimmen des Chirps oder einer dem Chirp proportionalen Größe umfasst folgende Schritte:

- Anpassen einer Linearkombination von Spektren A gemäß der Beziehung (4);
- Ermitteln der Phase Φ im Frequenzraum aus den jeweiligen Spektren; und
- Bestimmen einer dem Chirp proportionalen Größe als den Wert der zweifachen Ableitung der Phase Φ im Frequenzraum bei der Frequenz $f_d$, bei der das Spektrum ein Extremum aufweist.

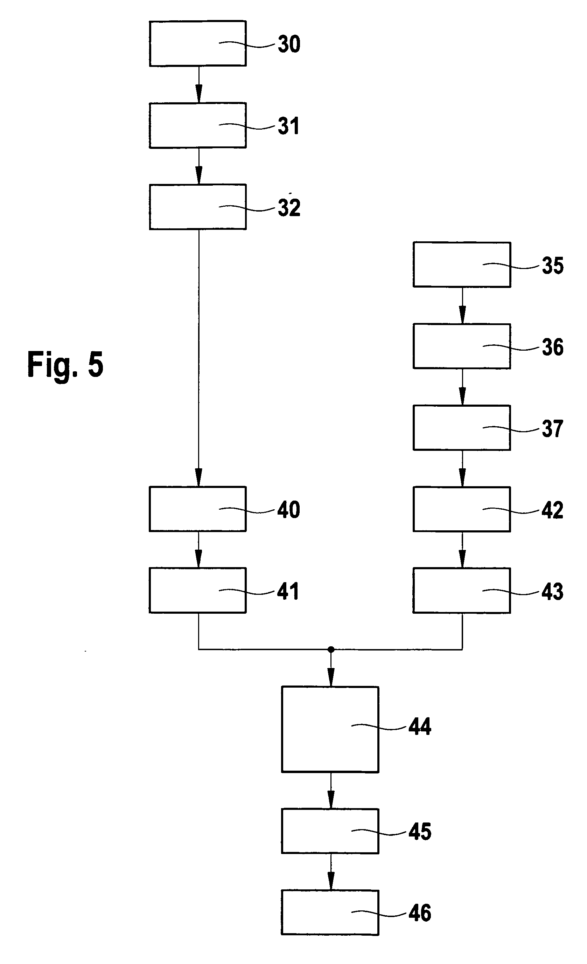

Eine Ausführungsform der vorliegenden Erfindung wird beispielhaft anhand der in Figur 1 dargestellten Situation erläutert und ist als Flussdiagramm in Figur 5 schematisch illustriert.

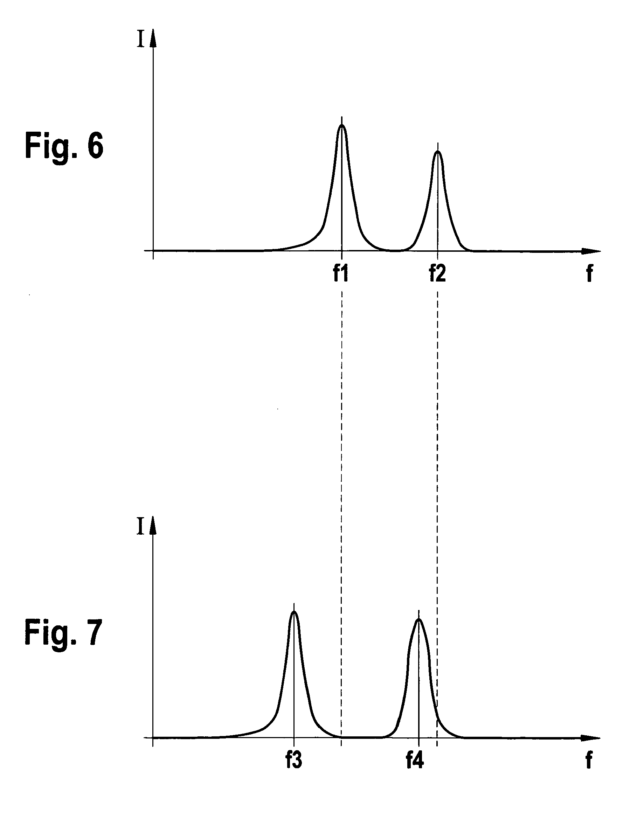

Zunächst wird eine erste Modulationsrate s festgelegt (30). Das FMCW-Radar emittiert Signale 5 für eine Zeitspanne, in welcher die Frequenz des emittierten Signals entsprechend der ersten Modulationsrate s variiert wird (31). Das Radar 4 empfängt zwei reflektierte Signale 6, 7. Das FMCW-Radar 4 mischt die empfangenen reflektierten Signale 6, 7 mit dem momentan emittierten Signal 5. Aus den entstehenden Mischprodukten wird alleinig das Differenzsignal zwischen dem momentan emittierten Signal und den momentan empfangenen reflektierten Signalen 6, 7 ermittelt, gegebenenfalls sind die Mischer derart eingerichtet, dass nur das Differenzsignal entsteht. Die jeweiligen sich ergebenden Differenzfrequenzen $f_d$ der beiden reflektierten Signale 6, 7 zu den momentan emittierten Signalen sind beispielhaft in Figur 6 als Frequenz f1 und Frequenz f2 angegeben. Typischerweise unterscheiden sich die beiden Frequenzen f1, f2.

Zu einem späteren Zeitpunkt, typischerweise innerhalb einer oder weniger Millisekunden, wird eine zweite Messung durchgeführt, dazu wird die Modulationsrate s der Frequenz des emittierten Signals 5 geändert (35). Die Modulationsrate s der ersten Messung und die Modulationsrate s der zweiten Messung unterscheiden sich. Das sich nun ergebende Spektrum aus den Differenzsignalen kann beispielsweise wie in Figur 7 illustriert aussehen. Das Spektrum weist wiederum zwei Peaks oder Extrema, diesmal bei den Frequenzen f3, f4 auf. Aus den beiden Spektren ist jedoch a priori nicht erkennbar, ob das Extremum bei der Frequenz f1 und das Extremum bei der Frequenz f3 reflektierten Signalen 7 desselben Objekts, z.B. dem Baum 3 oder dem vorausfahrenden Fahrzeug 2, oder die Extrema bei den Frequenzen f1 und f4 den reflektierten Signalen 7 desselben Objekts zuzuordnen sind.

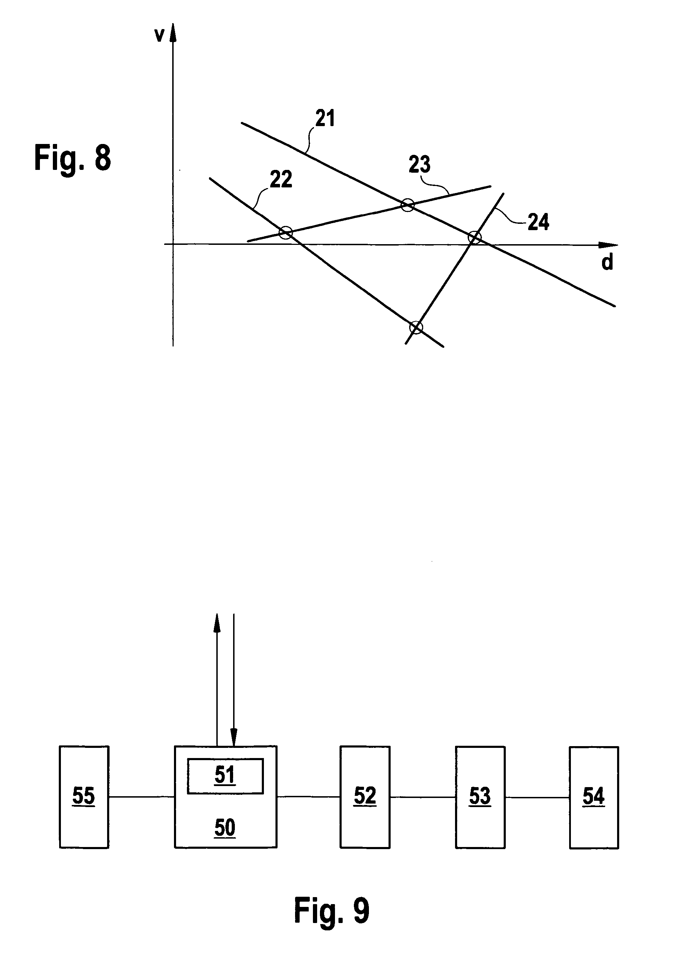

Die Abhängigkeit möglicher Abstände d von möglichen Relativgeschwindigkeiten v lässt sich für jedes der Extrema bestimmen und ist beispielhaft in Figur 8 graphisch dargestellt. Die beiden Geraden 21, 22 entsprechen beispielhaft den Extrema f1, f2 zu der ersten Messung und die Geraden 23, 24 den beiden Extrema bei den Frequenzen f3, f4 aus der zweiten Messung. Die Gerade 21 zugeordnet zu der ersten Messung schneidet sowohl die Gerade 23 als auch die Gerade 24, die der zweiten Messung zugeordnet sind. Ohne weitere Kenntnisse ergibt sich somit kein eindeutiges Ergebnis, welchen Abstand d und welche Relativgeschwindigkeit v ein Objekt aufweist, von dem das reflektierte Signal mit der Frequenz f1 in der ersten Messung herrührt. Gleiches gilt für das weitere Objekt, das in der ersten Messung durch das Extremum bei der Messung f2 identifiziert wird.

Die nachfolgenden Verfahrensschritte ermöglichen die Bereitstellung einer Zusatzinformation, die eine Zuordnung des Extremums bei der Frequenz f3 oder des Extremums bei der Frequenz f4 aus der zweiten Messung zu dem Extremum bei der Frequenz f1 aus der ersten Messung ermöglicht oder zumindest erleichtert, respektive ob ein Schnittpunkt der Graden 21 mit der Geraden 23 oder ein Schnittpunkt der Geraden 21 mit der Geraden 24 auszuwerten ist.

Aus den Differenzsignalen der ersten Messung wird der Chirp oder Frequenzchirp bestimmt. Hierzu werden vorzugsweise die Verfahrenschritte angewandt, welche zuvor bereits beschrieben sind. In dem beschriebenen Beispiel wird eine Linearkombination aus zwei theoretischen Spektren A an die gemessenen Spektren aus der ersten Messung angepasst (40). Die Phase im Frequenzraum kann für jedes Spektrum A explizit bestimmt werden. Geeignete Implementierungen (41) bestimmen den Wert der zweiten Ableitung der Phase im Frequenzraum nach der Frequenz bei dem jeweiligen Extremum unmittelbar aus der komplexen Amplitude des jeweiligen Spektrums unter Ausnützung der obig beschriebenen Beziehungen (4) bis (9). Die somit erhaltene Größe gibt den Chirp an. Für jedes Objekt und sein sich daraus ergebendes Differenzsignal, welches durch ein Spektrum A angepasst wird, wird der jeweilige Wert des Chirps ermittelt. Vorzugsweise wird nur eine dem Chirp proportionale Größe bestimmt.

Analog wird der Chirp zu jedem Extremum eines Spektrums aus der zweiten Messung ermittelt (42, 43).

In einem nächsten Schritt (44) werden die jeweiligen Chirps aus der ersten Messung mit den Chirps aus der zweiten Messung miteinander verglichen. Zuvor ist bereits ausgeführt worden, dass der Chirp im Wesentlichen proportional zu der Relativgeschwindigkeit v und der Modulationsrate s ist. Zwischen der ersten Messung und der zweiten Messung wird davon ausgegangen, dass sich die Relativgeschwindigkeit v eines Objekts nicht ändert. Entsprechend ist der Quotient aus dem Frequenzchirp β und der Modulationsrate s eine Unveränderliche. Es werden somit Paare von Chirps aus der ersten und der zweiten Messung gesucht, die geteilt durch die Modulationsrate der ersten bzw. zweiten Messung identisch oder nahezu identisch sind. Eine Abweichung der Quotienten innerhalb einer Toleranzschwelle wird als identisch erachtet.

Jeder Chirp wird aus einem Spektrum A ermittelt, das genau ein Extremum bei einer Frequenz $f_d$ aufweist. Der Chirp kann somit jeweils einem Extremum in einem gemessenen Spektrum zugeordnet werden. Zu einem Paar aus einem ersten Chirp aus einer ersten Messung und einem zweiten Chirp aus einer zweiten Messung wird das zugehörige Paar aus der dem ersten Chirp zugehörigen Frequenz und der dem zweiten Chirp zugehörigen Frequenz ermittelt (45). Aus dem Paar von Frequenzen wird unter Ausnützung der Beziehung (1) der Abstand und/oder die Relativgeschwindigkeit zu einem Objekt bestimmt (46).

Die zeitliche Abfolge der einzelnen Verfahrenschritte ist nicht durch die beschriebene Abfolge limitiert. Zweckmäßigerweise erfolgt das Ermitteln der Chirps oder Chirpsignale in getrennten Datenverarbeitungseinrichtungen, so dass eine parallele Verarbeitung zum Erfassen und Bestimmen der Differenzsignale möglich ist.

In einer weiteren Ausgestaltung wird der Anteil der Beschleunigung a in dem Chirp berücksichtigt. Bei zwei aufeinanderfolgenden Messungen mit unterschiedlicher Modulationsrate bleibt der Beitrag der Beschleunigung zu dem Chirp unverändert, die der Relativgeschwindigkeit ändert sich, wie aus der Beziehung (3) ersichtlich. Es ergeben sich somit für die erste und die zweite Messung eine lineare Abhängigkeit möglicher Beschleunigungen und Relativgeschwindigkeiten zu einem gemessenen Chirp. Diese Abhängigkeiten können beide als Geraden in einem Diagramm mit der Beschleunigung und der Relativgeschwindigkeit als Achsen aufgetragen werden. Der Schnittpunkt der beiden Geraden ergibt dann die tatsächliche Beschleunigung und die tatsächliche Relativgeschwindigkeit des Objekts. Bei mehreren Objekten ergeben sich Mehrdeutigkeiten analog zu Figur 8, da nicht vorab ersichtlich ist, welche Schnittpunkte der Geraden zu berücksichtigen sind.

Aus der Abhängigkeit von Relativgeschwindigkeit und Abstand festgelegt durch die gemessenen Differenzfrequenzen (Beziehung (2)) aus den ersten und zweiten Messungen ergeben sich Schnittpunkte im Lösungsraum. Hierdurch werden zumindest die möglicherweise eingenommenen Geschwindigkeiten auf eine endliche Zahl eingeschränkt. Aus der Abhängigkeit von Relativgeschwindigkeit und Beschleunigung festgelegt durch die bestimmten Chirps (Beziehung (3)) aus den ersten und zweiten Messungen ergeben sich Schnittpunkte im Lösungsraum. Hierdurch werden ebenfalls die möglicherweise eingenommenen Geschwindigkeiten eingeschränkt. Eine Suche nach Werten für Geschwindigkeiten, die in beiden Lösungsräumen noch enthalten sind, ermöglichen die Geschwindigkeit weiter einzuschränken oder gegebenenfalls genau zu bestimmen.

Eine Vorrichtung zum Durchführen der vorgenannten Ausführungsform sieht gemäß Fig. 9 zumindest eine Sende und eine Empfangseinrichtung 50 für Radar-Hochfrequenzsignale vor. Eine Mischereinrichtung 51 ermittelt aus dem momentan gesendeten und den momentan empfangenen Signalen die Differenzsignale. Eine Datenverarbeitungseinrichtung 52 ermittelt aus dem Spektrum die zweite Ableitung der Phase nach der Frequenz.

Obwohl die vorliegende Erfindung anhand einer bevorzugten Ausführungsform beschrieben ist, ist sie nicht darauf beschränkt. Insbesondere ist sie nicht auf die einzelnen Verfahrensschritte zum Ermitteln des Chirps beschränkt. Der Chirp kann auch durch einfaches Differenzieren des Spektrums in der Nähe der Extrema gewonnen werden, auch wenn das vorgenannte Verfahren wegen seiner höheren Güte bevorzugt wird.

## Patentansprüche

**1.** Verfahren zum Betreiben eines Radars, insbesondere eines Radars für ein Fahrerassistenzsystem in einem Kraftfahrzeug, mit den folgenden Schritten:

Bestimmen von ersten Differenzsignalen aus einem ersten ausgesendeten frequenzmodulierten Signal und empfangenen, von einer Mehrzahl von Objekten reflektierten Anteilen des ersten ausgesendeten frequenzmodulierten Signals;

Bestimmen von jeweils einem ersten Chirpsignal zu jedem ersten Differenzsignal, wobei das erste Chirpsignal der zweifachen Ableitung der Phase des ersten Differenzsignals nach der Zeit entspricht;

Bestimmen von zweiten Differenzsignalen aus einem zweiten ausgesendeten frequenzmodulierten Signal und empfangenen, von der Mehrzahl von Objekten reflektierten Anteilen des zweiten ausgesendeten frequenzmodulierten Signals;

Bestimmen von jeweils einem zweiten Chirpsignal zu jedem zweiten Differenzsignal, wobei das zweite Chirpsignal der zweifachen Ableitung der Phase des zweiten Differenzsignals nach der Zeit entspricht;

Zuordnen von einem der ersten Differenzsignale zu einem der zweiten Differenzsignale basierend auf einer Entsprechung des ersten Chirpsignals, das dem einen ersten Differenzsignal zugeordnet ist, zu dem zweiten Chirpsignal, das dem einen zweiten Differenzsignal zugeordnet ist; und

Bestimmen von Abstand und/oder Relativgeschwindigkeit eines der Objekte basierend auf dem einen ersten Differenzsignal und dem einen dem ersten Differenzsignal zugeordneten zweiten Differenzsignal.

2. Verfahren nach Anspruch 1, wobei
das Bestimmen des ersten und/oder des zweiten Chirpsignals folgende Schritte umfasst:

Ermitteln eines komplexen Spektrums des Differenzsignals;

Anpassen jeweils eines theoretischen komplexen Spektrums an jedes Extremum des gemessenen komplexen Spektrums;

Bestimmen einer Phase des Spektrums gemäß

$$\Phi = \arctan\left(\frac{\mathrm{Im}(A)}{\mathrm{Re}(A)}\right),$$

wobei Im(A) den Imaginärteil und Re(A) den Realteil des angepassten Spektrums bezeichnet; und

Bestimmen des ersten und/oder des zweiten Chirpsignals als den Wert der zweifachen Ableitung der Phase nach der Frequenz bei der Frequenz an der das Spektrum das Extremum annimmt.

3. Verfahren nach Anspruch 2, wobei das theoretische Spektrum durch eine Fourier-Transformierte des Differenzsignals bestimmt wird.

4. Verfahren nach einem der vorhergehenden Ansprüche, wobei das erste frequenzmodulierte Signal eine erste Modulationsrate und das zweite frequenzmodulierte Signal eine zweite Modulationsrate aufweist und die erste Modulationsrate und die zweite Modulationsrate verschieden sind.

5. Verfahren nach Anspruch 4, wobei eine erstes Chirpsignal einem zweiten Chirpsignal entspricht, wenn der Quotient aus dem ersten Chirpsignal und der ersten Modulationsrate sich von dem Quotient aus dem zweiten Chirpsignal und der zweiten Modulationsrate um nicht mehr als einen vorgegebenen Schwellwert unterscheidet.

6. Verfahren nach Anspruch 1, wobei aus den Frequenzen der ersten und zweiten Differenzsignale ein erster Werteraum potentiell eingenommener Geschwindigkeiten eines Objekts bestimmt werden und aus den ersten und zweiten Chirpsignalen ein zweiter Werteraum potentiell eingenommener Geschwindigkeiten des Objekts bestimmt werden und die Geschwindigkeit des Objekts als diejenige Geschwindigkeit bestimmt wird, die in beiden Werteräumen enthalten ist.

7. Radar-Vorrichtung, insbesondere ein Radar für ein Fahrerassistenzsystem in einem Kraftfahrzeug, mit:

einer Sende- und Empfangseinrichtung (50) zum Senden und Empfangen von frequenzmodulierten Signalen, die gemäß einer Modulationsrate frequenzmoduliert sind;

einer Mischereinrichtung (51) zum Bestimmen von Differenzsignalen aus einem ausgesendeten frequenzmodulierten Signal und empfangenen, von einer Mehrzahl von Objekten reflektierten Anteilen des ersten ausgesendeten frequenzmodulierten Signals

einer Datenverarbeitungseinrichtung (52) zum Bestimmen von jeweils einem Chirpsignal zu jedem Differenzsignal, wobei das Chirpsignal der zweifachen Ableitung der Phase des Differenzsignals nach der Zeit entspricht;

einer Stelleinrichtung (55) zum Ändern der Modulationsrate;

einer Zuordnungseinrichtung (53) zum Zuordnen von einem ersten Differenzsignal einer ersten Messung mit einer ersten Modulationsrate zu einem zweiten Differenzsignal einer zweiten Messung mit einer zweiten Modulationsrate basierend auf einer Entsprechung eines ersten Chirpsignals, das dem einen ersten Differenzsignal zugeordnet ist, zu einem zweiten Chirpsignal, das dem einen zweiten Differenzsignal zugeordnet ist; und einer Auswertungseinrichtung (54) zum Bestimmen von Abstand und/oder Relativgeschwindigkeit eines der Objekte basierend auf dem einen ersten Differenzsignal und dem einen dem ersten Differenzsignal zugeordneten zweiten Differenzsignal.

## Claims

1. Method for operation of a radar, in particular of a radar for a driver assistance system in a motor vehicle, having the following steps:

   determination of first difference signals from a first transmitted frequency-modulated signal and received components, reflected from a plurality of objects, of the first transmitted frequency-modulated signal;
   determination of in each case one first chirp signal for each first difference signal, wherein the first chirp signal corresponds to twice the time derivative of the phase of the first difference signal;
   determination of second difference signals from a second transmitted frequency-modulated signal and received components, reflected from the plurality of objects, of the second transmitted frequency-modulated signal;
   determination of in each case one second chirp signal for each second difference signal, wherein the second chirp signal corresponds to twice the time derivative of the phase of the second difference signal;
   association of one of the first difference signals with one of the second difference signals based on a correspondence of the first chirp signal, which is associated with a first difference signal, to the second chirp signal, which is associated with a second difference signal;
   and
   determination of the distance to and/or relative speed of one of the objects on the basis of a first difference signal and of the one second difference signal which is associated with the first difference signal.

2. Method according to Claim 1, wherein
   the determination of the first and/or of the second chirp signal comprises the following steps:

   determination of a complex spectrum of the difference signal;
   matching of in each case one theoretical complex spectrum to each extreme of the measured complex spectrum;
   determination of a phase of the spectrum using:

   $$\Phi = \arctan\left(\frac{\mathrm{Im}(A)}{\mathrm{Re}(A)}\right),$$

   where Im(A) denotes the imaginary part and Re (A) the real part of the matched spectrum;
   and
   determination of the first and/or of the second chirp signal as the value of twice the frequency derivative of the phase at the frequency at which the spectrum assumes the extreme.

3. Method according to Claim 2, wherein the theoretical spectrum is determined by a Fourier transform of the difference signal.

4. Method according to one of the preceding claims, wherein the first frequency-modulated signal has a first modulation rate and the second frequency-modulated signal has a second modulation rate, and the first modulation rate and the second modulation rate are different.

5. Method according to Claim 4, wherein a first chirp signal corresponds to a second chirp signal when the quotient of the first chirp signal and the first modulation rate differs from the quotient of the second chirp signal and the second modulation rate by no more than a predetermined threshold value.

**6.** Method according to Claim 1, wherein a first value space of potentially assumed speeds of an object is determined from the frequencies of the first and second difference signals and a second value space of potentially assumed speeds of the object is determined from the first and second chirp signals, and the speed of the object is determined as that speed which is contained in both value spaces.

**7.** Radar apparatus, in particular a radar for a driver assistance system in a motor vehicle, having:

a transmitting and receiving device (50) for transmitting and receiving frequency-modulated signals which are frequency-modulated at one modulation rate;
a mixer device (51) for determination of difference signals from a transmitted frequency-modulated signal and received components, reflected from a plurality of objects, of the first transmitted frequency-modulated signal,
a data processing device (52) for determination of in each case one chirp signal for each difference signal, wherein the chirp signal corresponds to twice the time derivative of the phase of the difference signal;
an actuating device (55) for variation of the modulation rate;
an association device (53) for association of a first difference signal of a first measurement at a first modulation rate with a second difference signal of a second measurement at a second modulation rate, based on correspondence of a first chirp signal, which is associated with the one first difference signal, to a second chirp signal, which is associated with the one second difference signal; and
an evaluation device (54) for determination of the distance to and/or relative speed of one of the objects based on the one first difference signal and the one second difference signal with is associated with the first difference signal.

## Revendications

**1.** Procédé d'utilisation d'un radar, en particulier d'un radar pour système d'assistance au conducteur d'un véhicule automobile, le procédé comportant les étapes suivantes :

à partir de premiers signaux de différence entre un premier signal émis en modulation de fréquence, déterminer des parties du premier signal émis en modulation de fréquence réfléchies par plusieurs objets,
pour chaque premier signal de différence, déterminer un premier signal de stridulation, le premier signal de stridulation correspondant à la dérivée seconde par rapport au temps de la phase du premier signal de différence,
déterminer des deuxièmes signaux de différence à partir d'un deuxième signal émis en modulation de fréquence et de parties reçues, réfléchies par plusieurs objets, du deuxième signal émis en modulation de fréquence,
pour chaque deuxième signal de différence, déterminer un deuxième signal de stridulation, le deuxième signal de stridulation correspondant à la dérivée seconde en fonction du temps de la phase du deuxième signal de différence,
associer un des premiers signaux de différence à un des deuxièmes signaux de différence en fonction d'une correspondance entre le premier signal de stridulation associé au premier signal de différence et le deuxième signal de stridulation associé au deuxième signal de différence et
déterminer la distance et/ou la vitesse relative de l'un des objets en fonction du premier signal de différence et du deuxième signal de différence associé au premier signal de différence.

**2.** Procédé selon la revendication 1, dans lequel la détermination du premier et/ou du deuxième signal de stridulation comprend les étapes suivantes :

déterminer un spectre complexe du signal de différence,
adapter un spectre complexe théorique à chaque extremum du spectre complexe mesuré,
déterminer la phase du spectre selon la relation :

$$\Phi = \arctan\left(\frac{\mathrm{Im}(A)}{\mathrm{Re}(A)}\right)$$

dans laquelle Im(A) représente la partie imaginaire et Re(A) la partie réelle du spectre adapté et
déterminer le premier et/ou le deuxième signal de stridulation comme valeur de la dérivée seconde de la phase en fonction de la fréquence à la fréquence à laquelle le spectre prend son extremum.

3. Procédé selon la revendication 2, dans lequel le spectre théorique est déterminé par transformée de Fourier du signal de différence.

4. Procédé selon l'une des revendications précédentes, dans lequel le premier signal à modulation de fréquence présente un premier taux de modulation et le deuxième signal à modulation de fréquence un deuxième taux de modulation, le premier taux de modulation et le deuxième taux de modulation étant différents.

5. Procédé selon la revendication 4, dans lequel un premier signal de stridulation correspond à un deuxième signal de stridulation si le quotient entre le premier signal de stridulation et le premier taux de modulation n'est pas différent de plus qu'une valeur de seuil prédéterminée du quotient entre le deuxième signal de stridulation et le deuxième signal de modulation.

6. Procédé selon la revendication 1, dans lequel un premier espace de valeurs de vitesse potentiellement prises par un objet est déterminé à partir des fréquences du premier et du deuxième signal de différence et un deuxième espace de valeurs de vitesse potentiellement prises par l'objet est déterminé à partir du premier et deuxième signal de stridulation, la vitesse de l'objet étant définie comme étant la vitesse qui est incluse dans les deux espaces de valeurs.

7. Ensemble de radar, en particulier radar pour système d'assistance au conducteur d'un véhicule automobile, présentant :

un dispositif (50) d'émission et de réception qui émet et reçoit des signaux modulés en fréquence par un taux de modulation,
un dispositif de mélange (51) qui détermine les signaux de différence entre un signal émis en modulation de fréquence et des parties reçues, réfléchies par plusieurs objets, du premier signal émis en modulation de fréquence,
un dispositif (52) de traitement de données qui détermine un signal de stridulation pour chaque signal de différence, le signal de stridulation correspondant à la dérivée seconde par rapport au temps de la phase du signal de différence,
un dispositif d'ajustement (55) qui modifie les taux de modulation,
un dispositif d'association (53) qui associe un premier signal de différence d'une première mesure avec un premier taux de modulation à un deuxième signal de différence d'une deuxième mesure avec un deuxième taux de modulation en fonction de la correspondance entre un premier signal de stridulation associé au premier signal de différence et un deuxième signal de stridulation associé à un deuxième signal de différence et
un dispositif d'évaluation (54) qui détermine la distance et/ou la vitesse relative de l'un des objets en fonction du premier signal de différence et du deuxième signal de différence associé au premier signal de différence.

**Fig. 1**

Fig. 2

Fig. 3

Fig. 4

# Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004047087 A1
- DE 102005012945 A1
- DE 19651540